# EUROPEAN PATENT SPECIFICATION

(11) **EP 1 206 664 B1**
(45) Date of publication and mention of the grant of the patent: **30.07.2008**
(21) Application number: 00953315.9
(22) Date of filing: 14.08.2000
(51) Int. Cl.: F21S 9/03

(54) **SOLAR-POWERED APPARATUS**
SONNENENERGIEBETRIEBENE EINRICHTUNG
APPAREIL ALIMENTE PAR L'ENERGIE SOLAIRE

(30) Priority: 14.08.1999 GB 9919171
(43) Date of publication of application: 22.05.2002
(73) Proprietor: Foulsham, Kevin Carl Patrick, Slough, Berkshire SL3 7QZ (GB)
(72) Inventor: FOULSHAM, Kevin, Carl, Patrick, Slough, Berkshire SL3 7QZ (GB); COTTRELL, Andrew, Slough, Berkshire SL3 7QZ (GB)
(74) Representative: Coles, Graham Frederick
(86) International application number: PCT/GB2000/003135
(87) International publication number: WO 2001/013038

(56) References cited:
- WO-A-96/20369
- WO-A-97/36132
- DE-A- 4 009 389

## Description

This invention relates to solar-powered apparatus of the kind comprising solar-cell means for responding to incident light to provide an electrical signal-output dependent on the light-level sensed, rechargeable power-source means that is recharged from the signal-output of the solar-cell means, output means powered electrically from the power-source means for providing an output of the apparatus, and circuit means responsive to the signal-output of the solar-cell means and in dependence upon the light-value sensed to nominate a time for powering the output means, the output means being powered from the power-source means in accordance with the nominated time.

Solar-powered apparatus of the above-specified kind is known from WO-A-96/20369 for powering a lamp used in street-lighting. Power supply to the lamp from a battery that is recharged from solar-cells, is controlled in accordance with stored information of year-round clear-sky light levels for the location of the lamp, and also in dependence upon the ambient light sensed by the solar-cells.

It is an object of the present invention to provide solar-powered apparatus of said above-specified kind that has advantage over the known apparatus.

According to the present invention solar-powered apparatus of said above-specified kind is characterised in that the circuit means derives a representation of an accumulation throughout a period of time of light-values sensed successively by the solar-cell means during that period, and that the time nominated for powering the output means is dependent on the derived representation.

The apparatus according to the invention has the advantage that powering of the output means is timed according to the said nominated time rather than as with known apparatus, directly according to the light-level currently sensed. This is of importance especially where the apparatus is such as a traffic beacon and the output means is a lamp or other light-source, since it enables operation of the lamp or other light-source to be related to the trend in ambient light-level rather than to the instantaneous level. With this it is possible to establish, for example, a daily pattern for operation of the lamp or other light-source that adapts automatically to daily changes in the timing of dusk and the duration of darkness.

Furthermore, the present invention has the advantage that it enables the two actions of powering the output means and recharging the power-source means to be carried out from the solar-cell means without substantially any interference between them. In particular, the instantaneous output-signal from the solar-cell means will be affected while it is being used to recharge the power-source means, and if the criterion for powering the output means were to be the instantaneous output of the solar-cell means, inconsistent and power-wasting operation of the output means could be expected. Furthermore, the effective separation of the two actions of powering the output means and recharging the power-source means, readily enables recharging to take place even while the output means is being powered. More especially, in the context of application of the invention to a traffic beacon, the power-source means may be recharged from the output of the solar-cell means while the light-source is being pulse-powered; for example, the solar-cell means may respond to artificial light from vehicles to provide current for recharging the power-source means.

The power-source means may be one or more rechargeable batteries, but may in addition, or alternatively, involve one or more charge-storage capacitors.

The apparatus of the present invention when applied to the provision of a traffic beacon may take the form of a unit for attachment to a traffic cone or post; alternatively, it may be incorporated into a traffic cone or post.

A traffic cone incorporating a traffic beacon in accordance with the present invention will now be described, by way of example, with reference to the accompanying drawings, in which:
Figure 1 is a front elevation of the cone partly broken away to show details of the beacon according to the invention; and
Figure 2 is a partly schematic representation of the electrical circuitry of the beacon of Figure 1.

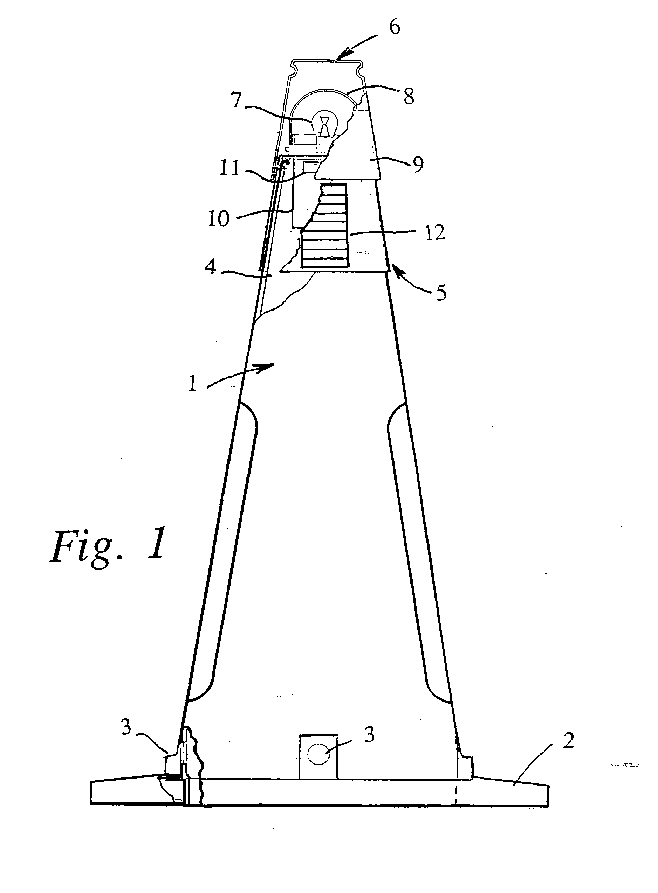

Referring to Figure 1, the traffic cone has a body 1 that is formed as a hollow moulding of a brightly-coloured polymer with a weighted base 2. The body 1 has drainage vents 3 and is fitted at its top end 4 with a sleeve 5 that carries a beacon unit 6. The unit 6 includes a lamp 7 that is housed within a clear transparent cover 8 inside an outer, frusto-conical coloured lens 9 that tops the cone.

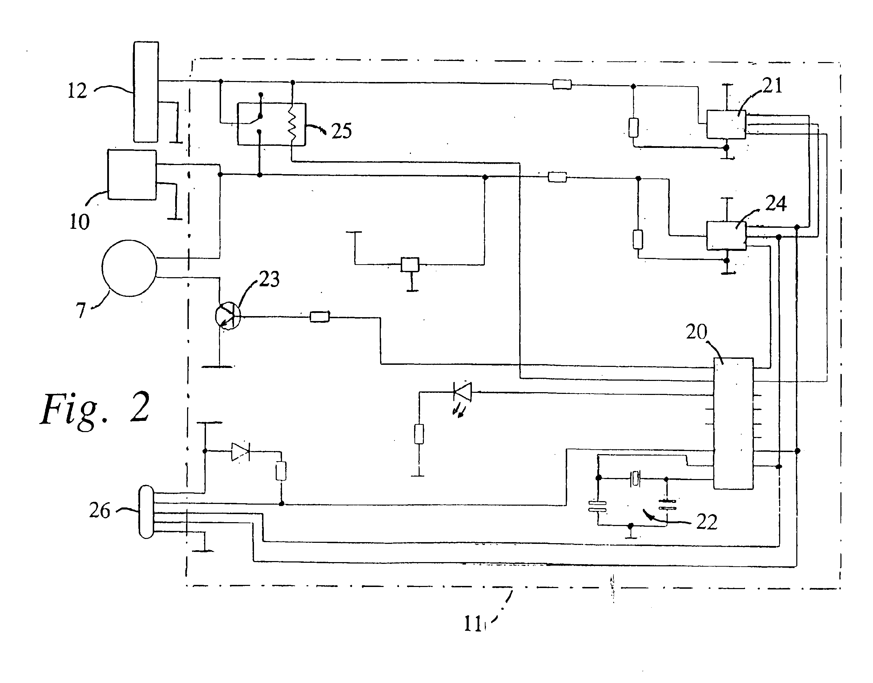

The lamp 7 is powered from a rechargeable battery-pack 10 under control of an electronic circuit 11, both mounted within the sleeve 5. The circuit 11 controls energisation of the lamp 7 and also recharging of the battery-pack 10 from the output of a thin-film solar-cell module or panel 12 that is mounted on the outside of the sleeve 5 to be exposed to the headlights of passing vehicles as well as to ambient daylight. Details of the circuit 11 are shown in Figure 2 and will now be described together with operation of the circuit 11 in controlling power supply to the lamp 7 and recharging of the battery-pack 10.

Referring to Figure 2, the circuit 11 includes a microprocessor 20 (having a low-power requirement) that is supplied by an analogue-to-digital converter 21 with a digital representation of the voltage output of the solar-cell panel 12. The processor 20 responds to this digital signal to control energisation of the lamp 7. In this respect, the processor 20, which has an associated clock circuit 22, supplies a signal to the base of a switching transistor 23 that has its collector-emitter current path connected in series with the battery-pack 10 and the lamp 7. The signal supplied is either a pulse signal to switch the transistor 23 on and off periodically and cause flashing of the lamp 7, or a bias to hold the transistor 23 off. Which of these signals is supplied is dependent on comparison between the time of day determined by the processor 20 from the clock circuit 22, and nominated times identified with 'dusk' and 'dawn' within the processor 20.

The 'dusk' and 'dawn' time-nominations, which are refreshed within the processor 20 recurrently at five-minute intervals, define the times when flashing of the lamp 7 is to be turned on and off respectively. These nominations are derived from a table of samples of the ambient-light level represented by the output of the panel 12. More particularly, the output of the panel 12 is sampled 256 times during each successive period of thirty minutes (that is to say, nominally at 7-second intervals), and representations of the samples are accumulated by the processor 20 for the immediately-preceding twenty-four hours. The table of samples is smoothed or averaged out every five minutes across a running sequence of six samples and the lowest and highest average light-readings are then selected for use in calculating a threshold light-value as a criterion for the 'dusk' and 'dawn' nominations. The threshold light-value is calculated by adding to the lowest average light-value twenty-percent of the difference between the highest and lowest average values. This calculated threshold value, corresponding to twenty-percent of the average highest light-value above the average lowest, is used to determine from the accumulated table of samples, when during the immediately preceding twenty-four hours the level of daylight fell below, and then rose through that threshold. The identified time-values provide the 'dusk' and 'dawn' nominations for flashing of the lamp 7 to begin and end respectively.

Maintenance of flashing of the lamp 7 depends upon the state of charge of the battery-pack 10, and the output of the solar-cell panel 12 is used during daylight, when the transistor 23 is normally held off, to recharge it. In this regard, the processor 20 is supplied from an analogue-to-digital converter 24 at the nominal 7-second intervals with a digital signal representative of the instantaneous voltage output of the battery-pack 10. While the transistor 23 is held off and the represented battery-voltage is not higher than the voltage output of the solar-panel 12, the processor 20 energises a relay 25 to connect the battery-pack 10 across the panel 12 for recharging. The sampling of the output of the panel 12 at the nominal 7-second intervals for accumulation by the processor 20 of the table of ambient-light samples, continues while recharging is in progress. However, energisation of the relay 25 from the processor 20 is interrupted to disconnect the battery-pack 10 from the panel 12 during the taking of the sample, so that the sample is not distorted by the state of charge of the battery-pack 10.

The output of the solar-cell panel 12 is also used intermittently for recharging the battery-pack 10, while the lamp 7 is flashing. In this regard, if while the lamp 7 is being energised by periodic switching on and off of the transistor 23, the panel 12 is activated by light from vehicle headlights or other artificial-light sources to provide an output voltage in excess of the battery-voltage, the processor 20 responds to this to energise the relay 25. The relay 25 is energised transitorily to connect the battery-pack 10 across the panel 12 for charging in the intervals between switching of the transistor 23 on. But here again, the charging process is interrupted whenever a sample of the output of the panel 12 is to be taken during the nominal 7-second cycle.

Recharging of the battery-pack 10, although carried out to some extent from artificial light while the lamp 7 is flashing, takes place principally during daylight when the lamp 7 is not operative. There can be circumstances, particularly in winter, when the battery-pack 10 is insufficiently charged to sustain the lamp 7 flashing throughout the period between the 'dusk' and 'dawn' nominations. In order to compensate in these circumstances, the processor 20 as supplied at the nominal 7-second intervals from the convertor 24 with the digital representation of the voltage output of the battery-pack 10, calculates the power available. This calculation is used in conjunction with the 'dusk' and 'dawn' nominations to estimate whether the battery power is adequate to maintain a standard flashing cycle of the lamp 7 throughout the interval between them.

If according to the estimate, the power available is adequate, the processor 20 establishes the standard on-off (mark to space) ratio of 1:5 for pulsing the transistor 23. On the other hand, if the estimate indicates that the power available is inadequate, the processor 20 calculates whether it would be adequate to sustain the lamp 7 flashing with a less-onerous on-off ratio between 1:5 and 1:10 for pulsing the transistor 23, and if it is, to establish for that purpose the highest ratio in that range. In the event that the power available is inadequate to support a pulsing ratio as high as 1:10, the processor 20 establishes the pulsing ratio at 1:10. It then adjusts the 'dusk' and 'dawn' nominations of time equally in opposite senses to one another, so as to reduce the interval between them to such an extent that the battery-power is adequate for the lamp 7 to continue flashing at the 1:10 pulsing throughout.

The operation of the beacon thus proceeds according to a repetitive program executed by the processor 20. The program has three main sequences, one, identified as sequence A, is performed 256 times in each successive period of thirty minutes (that is, at the nominal 7-second rate), as follows:
(a) receive digital representation of voltage output of the solar-cell panel 12;
(b) add representation of stage (a) to an accumulated running total [see(i) of sequence B below];
(c) receive and store digital representation of the output voltage of the battery-pack 10;
(d) compare representations of stages (a) and (c) with one another; and
(e) if according to the comparison of stage (d) the output voltage of the panel 12 is greater than that of the pack 10, energise relay 25 to recharge the battery 10 from the panel 12.

A second of the three sequences, sequence B, performed every thirty minutes, is as follows:
(f) read the accumulated running total of stage (b) of sequence A;
(g) derive from the running total of stage (f), the value of the average output voltage (over the immediately-preceding thirty-minute interval) for the solar-cell panel 12;
(h) enter the derived average output voltage in a table of such output voltages accumulated for successive cycles of this sequence B over the last twenty-four hours;
(i) restart the running total of representations of the output voltage of the solar-cell panel 12.

The third sequence, sequence C, performed every five minutes, is as follows:
(j) copy the table of stage (h) of sequence B;
(k) smooth the copied table of stage (j) with a six-value running average-window;
(1) determine from the smoothed table of stage (k), the lowest value represented;
(m) determine from the smoothed table of stage (k), the highest value represented;
(n) calculate twenty-percent of the difference between the highest and lowest values determined in stages (m) and (1) and add to the lowest value determined in stage (1) to derive a threshold value for this sequence C;
(o) scan the table of stage (j) to determine the time when the output-voltage value fell below the threshold value derived in stage (n), and record this as a 'dusk' nomination;
(p) scan the table of stage (j) to determine the time when the output-voltage value rose through the threshold value derived in stage (n), and record this as a 'dawn' nomination;
(q) from stored digital representation of the output voltage of the battery-pack 10 of stage (c) of sequence A, calculate power remaining in battery-pack 10;
(r) determine whether the calculated power-remaining of stage (q) is adequate to maintain a prospective mark-to-space ratio of 1:5 for-pulsing the transistor 23 for a period which, if the transistor 23 is currently biased off, is that between the 'dusk' and 'dawn' time-nominations of stages (o) and (p), or otherwise is that between the current time and the 'dawn' time-nomination;
(s) if it is determined that the calculated power-remaining of stage (q) is adequate under stage (r), set the mark-to-space ratio to 1:5, but if not, repeat stage (r) decreasing the prospective mark-to-space ratio progressively from 1:5 to 1:10;
(t) if the calculated power-remaining of stage (q) is found adequate for a decreased, prospective mark-to-space ratio under stage (s) set the mark-to-space ratio to that ratio, but if not even for a prospective mark-to-space ratio of 1:10, set the mark-to-space ratio to 1:10;
(u) if the calculated power-remaining of stage (q) is found inadequate for the prospective mark-to-space ratio of 1:10 under stage (s), then, if the transistor 23 is biased off, adjust the 'dusk' and 'dawn' time-nominations of stages (o) and (p) equally to reduce the interval between them to give adequacy of the power-remaining under stage (q), or otherwise adjust the 'dawn' time nomination towards the current time to the same end;
(v) if the current time is between the 'dusk' and 'dawn' time-nominations of stages (o) and (p) as adjusted if applicable under stage (u), pulse the transistor 23 at the mark-to-space ratio set under stage (s) or (t), otherwise bias the transistor 23 off.
operation of the beacon in accordance with the above sequencing enables optimum use to be made of the solar energy received and advantage to be taken of light from other sources, without prejudicing fundamental beacon-functions.

Provision is made by means of an interface 26 for deriving reports of the current rate and state of charge (and other health aspects) of the battery-pack 10, and confirming operational integrity of the circuit 11 and lamp 7. The interface 26 may also be used for charging the battery-pack 10 from an external source and as an input-port for use in re-programming the processor 20 (for example, allowing the user to modify the operational algorithm). External connection to the interface 26 could be by contact, or could be contactless, and in particular transfer of data to and from it could be by radio or infra-red transmission. However, input of data to the circuit 11 could be effected via the solar-cell panel 12 (or part of it) using modulated light, and provided its response characteristics were suitable for modulated-light transmission, the lamp 7 could be used for the output of data.

The light-source of the traffic beacon may be provided by one or more light-emitting diodes (LEDs) rather than the lamp 7.

The beacon unit 6, or just the solar-cell panel 12, may be adjustable in azimuth relative to the cone-body 1 for achieving optimum orientation with respect to the sun and to traffic flow. More especially, the unit 6 may include a servo-control system for driving the panel 12 to follow the sun by day and at night achieve maximum benefit from headlights and other light. Alternatively and more simply, the panel 12 could be enlarged to extend round the circumference of the unit 6, to achieve essentially the same effect.

## Claims

1. Solar-powered apparatus comprising solar-cell means (12) for responding to incident light to provide an electrical signal-output dependent on the light-level sensed, rechargeable power-source means (10) that is recharged from the signal-output of the solar-cell means (12), output means (7) powered electrically from the power-source means (10) for providing an output of the apparatus, and circuit means (11) responsive to the signal-output of the solar-cell means (12) and in dependence upon the light-level sensed to nominate a time for powering the output means (7), the output means (7) being powered from the power-source means (10) in accordance with the nominated time, **characterised in that** the circuit means (11) derives a representation of an accumulation throughout a period of time of light-level sensed successively by the solar-cell means (12) during that period, and that the time nominated for powering the output means (7) is dependent on the derived representation.

2. Apparatus according to Claim 1 wherein said light-level values are average values of light-level sensed by the solar-cell means (12) during successive intervals of said period.

3. Apparatus according to Claim 1 or Claim 2 wherein said period of time is the preceding period of twenty-four hours.

4. Apparatus according to any one of Claims 1 to 3 wherein the nominated time is related to the timing within said period when the representation of accumulated light-level values fell below a threshold value, said threshold value being intermediate the highest and lowest light-level values applicable during said period.

5. Apparatus according to claim 4 wherein said threshold value is calculated as a proportion of the difference between said highest and lowest values, above said lowest value.

6. Apparatus according to Claim 4 or Claim 5 wherein powering of the output means (7) from the power-source means (10) is terminated in accordance with a further nominated time, said further nominated time being related to the timing within said period when the representation of accumulated light-level values rose through said threshold value.

7. Apparatus according to any one of Claims 1 to 6 wherein said output means (7) is pulse-powered.

8. Apparatus according to Claim 7 wherein the circuit means (11) calculates the power remaining in said power-source means (10) and from this determines whether the calculated power-remaining is adequate to maintain the pulse-powering of the output means (7) with a predetermined mark-to-space ratio throughout a proposed interval of time beginning with the nominated time, and, wherein the output means (7) is pulse-powered at the predetermined mark-to-space ratio in the event that the calculated power-remaining is determined to be adequate as aforesaid, and is otherwise pulse-powered with a reduced mark-to-space ratio.

9. Apparatus according to Claim 8 wherein the reduced mark-to-space ratio is determined as the maximum that can be maintained throughout the proposed interval of time with the calculated power-remaining.

10. Apparatus according to any one of Claims 7 to 9 wherein recharging of the power-source means (10) from the solar-cell means (12) is enabled in the intervals between the power pulses.

11. Apparatus according to any one of claims 1 to 10 wherein the output means is a light source (7).

12. Apparatus according to Claim 11 for use as a traffic beacon (6).

## Patentansprüche

1. Solarbetriebene Vorrichtung, die aufweist: eine Solarzelleneinrichtung (12) zum Reagieren auf auftreffendes Licht, um abhängig vom abgetasteten Lichtpegel eine elektrische Signalabgabe bereitzustellen, eine wiederaufladbare Stromquelleneinrichtung (10), die von der Signalabgabe der Solarzelleneinrichtung (12) wieder aufgeladen wird, eine Abgabeeinrichtung (7), die aus der Stromquelleneinrichtung (10) elektrisch betrieben wird, um eine Leistungsabgabe der Vorrichtung bereitzustellen, und eine Schaltungseinrichtung (11), die auf die Signalabgabe der Solarzelleneinrichtung (12) und in Abhängigkeit vom abgetasteten Lichtpegel reagiert, um eine Zeit zum Betreiben der Abgabeeinrichtung (7) zu benennen, wobei die Abgabeeinrichtung (7) entsprechend der benannten Zeit aus der Stromquelleneinrichtung (10) betrieben wird, **dadurch gekennzeichnet, daß** die Schaltungseinrichtung (11) eine Repräsentation einer Akkumulation während einer gesamten Zeitspanne eines Lichtpegels ableitet, der hintereinander durch die Solarzelleneinrichtung (12) während dieser Spanne abgetastet wird, und daß die Zeit, die zum Betreiben der Abgabeeinrichtung (7) benannt wird, von der ableiteten Repräsentation abhängig ist.

2. Vorrichtung nach Anspruch 1, wobei die Lichtpegelwerte Durchschnittswerte des Lichtpegels sind, der durch die Solarzelleneinrichtung (12) während aufeinanderfolgender Intervalle der Spanne abgetastet wird.

3. Vorrichtung nach Anspruch 1 oder 2, wobei die Zeitspanne die vorausgehende Spanne von vierundzwanzig Stunden ist.

4. Vorrichtung nach einem der Ansprüche 1 bis 3, wobei die benannte Zeit mit dem Timing innerhalb der Spanne in Beziehung steht, wo die Repräsentation der akkumulierten Lichtpegelwerte unter einem Schwellenwert fiel, wobei der Schwellenwert zwischen den höchsten und niedrigsten Lichtpegelwerten liegt, die während der Spanne anwendbar sind.

5. Vorrichtung nach Anspruch 4, wobei der Schwellenwert als ein Anteil der Differenz zwischen den höchsten und niedrigsten Werten über dem niedrigsten Wert berechnet wird.

6. Vorrichtung nach Anspruch 4 oder 5, wobei das Betreiben der Abgabeeinrichtung (7) aus der Stromquelleneinrichtung (10) entsprechend einer weiteren benannten Zeit beendet wird, wobei die weitere benannte Zeit mit dem Timing in der Spanne in Beziehung steht, wo die Repräsentation der akkumulierten Lichtpegelwerte durch den Schwellenwert stieg.

7. Vorrichtung nach einem der Ansprüche 1 bis 6, wobei die Abgabeeinrichtung impulsbetrieben ist.

8. Vorrichtung nach Anspruch 7, wobei die Schaltungseinrichtung (11) die Energie berechnet, die in der Stromquelleneinrichtung (10) verbleibt, und daraus bestimmt, ob die berechnete verbleibende Energie ausreichend ist, den Impulsbetrieb der Abgabeeinrichtung (7) mit einem vorgegebenen Zeichen-Zwischenraum-Verhältnis während eines gesamten beabsichtigten Zeitintervalls aufrechtzuerhalten, das mit der benannten Zeit beginnt, und wobei die Abgabeeinrichtung (7) in dem Fall, daß festgestellt wird, daß die berechnete verbleibende Energie wie oben erwähnt ausreichend ist, mit dem vorgegebenen Zeichen-Zwischenraum-Verhältnis impulsbetrieben wird und andernfalls mit einem reduzierten Zeichen-Zwischenraum-Verhältnis impulsbetrieben wird.

9. Vorrichtung nach Anspruch 8, wobei das reduzierte Zeichen-Zwischenraum-Verhältnis als das Maximum bestimmt wird, das während des gesamten beabsichtigten Zeitintervalls mit der berechneten verbleibenden Energie aufrechterhalten werden kann.

10. Vorrichtung nach einem der Ansprüche 7 bis 9, wobei die Wiederaufladung der Stromquelleneinrichtung (10) aus der Solarzelleneinrichtung (12) in den Intervallen zwischen den Stromimpulsen freigegeben wird.

11. Vorrichtung nach einem der Ansprüche 1 bis 10, wobei die Abgabeeinrichtung eine Lichtquelle (7) ist.

12. Vorrichtung nach Anspruch 11 zur Verwendung als eine Verkehrsampel (6).

## Revendications

1. Appareil alimenté par l'énergie solaire comprenant des moyens de cellule solaire (12) pour répondre à la lumière incidente afin de fournir une sortie de signal électrique dépendante du niveau de lumière détecté, des moyens de source d'énergie rechargeables (10) qui sont rechargés à partir de la sortie de signal des moyens de cellule solaire (12), des moyens de sortie (7) alimentés électriquement à partir des moyens de source d'énergie (10) afin de fournir une sortie de l'appareil, et des moyens de circuit (11) sensibles à la sortie de signal des moyens de cellule solaire (12) et en fonction du niveau de lumière détecté pour sélectionner un temps pour alimenter les moyens de sortie (7), les moyens de sortie (7) étant alimentés à partir des moyens de source d'énergie (10) selon le temps sélectionné, **caractérisé en ce que** les moyens de circuit (11) dérivent une représentation d'une accumulation pendant une période de temps du niveau de lumière détecté successivement par les moyens de cellule solaire (12) pendant cette période, et que le temps sélectionné pour alimenter les moyens de sortie (7) est fonction de la représentation dérivée.

2. Appareil selon la revendication 1, dans lequel lesdites valeurs de niveau de lumière sont des valeurs moyennes du niveau de lumière détecté par les moyens de cellule solaire (12) pendant des intervalles successifs de ladite période.

3. Appareil selon la revendication 1 ou 2, dans lequel ladite période de temps est la période précédente de 24 heures.

4. Appareil selon l'une quelconque des revendications 1 à 3, dans lequel le temps sélectionné est lié au rythme dans ladite période lorsque la représentation des valeurs de niveau de lumière accumulée tombe en dessous d'une valeur seuil, ladite valeur seuil étant située entre la valeur de niveau de lumière la plus élevée et la valeur de niveau de lumière la plus basse applicables pendant ladite période.

5. Appareil selon la revendication 4, dans lequel ladite valeur seuil est calculée comme étant une proportion de la différence entre ladite valeur la plus élevée et ladite valeur la plus basse, au-dessus de ladite valeur la plus basse.

6. Appareil selon la revendication 4 ou 5, dans lequel l'alimentation des moyens de sortie (7) à partir des moyens de source d'énergie (10) est terminée selon un temps sélectionné supplémentaire, ledit temps sélectionné supplémentaire étant lié au rythme dans ladite période lorsque la représentation des valeurs de niveau de lumière accumulée augmente jusqu'à ladite valeur de seuil.

7. Appareil selon l'une quelconque des revendications 1 à 6, dans lequel lesdits moyens de sortie (7) sont alimentés par impulsions.

8. Appareil selon la revendication 7, dans lequel les moyens de circuit (11) calculent l'énergie restante dans lesdits moyens de source d'énergie (10) et, à partir de ceci, déterminent si l'énergie restante calculée est adéquate pour maintenir l'alimentation par impulsions des moyens de sortie (7) avec un rapport cyclique prédéterminé pendant un intervalle de temps proposé commençant avec le temps sélectionné et dans lequel les moyens de sortie (7) sont alimentés par impulsions selon le rapport cyclique prédéterminé dans le cas où l'énergie restante calculée est déterminée pour être adéquate comme mentionné ci-dessus et, dans le cas contraire, ils sont alimentés par impulsions avec un rapport cyclique réduit.

9. Appareil selon la revendication 8, dans lequel le rapport cyclique réduit est déterminé comme étant le rapport maximal pouvant être maintenu pendant l'intervalle de temps proposé avec l'énergie restante calculée.

10. Appareil selon l'une quelconque des revendications 7 à 9, dans lequel la recharge des moyens de source d'énergie (10) à partir des moyens de cellule solaire (12) est autorisée dans les intervalles entre les impulsions d'énergie.

11. Appareil selon l'une quelconque des revendications 1 à 10, dans lequel les moyens de sortie sont une source de lumière (7).

12. Appareil selon la revendication 11 pour une utilisation comme balise de trafic (6).
